# EUROPÄISCHE PATENTSCHRIFT

(11) **EP 0 737 139 B1**
(45) Veröffentlichungstag und Bekanntmachung des Hinweises auf die Patenterteilung: **08.04.1998**
(21) Anmeldenummer: 95934601.6
(22) Anmeldetag: 11.10.1995
(51) Int. Cl.: B60R 13/02, B29C 44/44

(54) **VERKLEIDUNGSTEIL FÜR DEN INNENAUSBAU INSBESONDERE VON KRAFTFAHRZEUGEN UND VERFAHREN ZUR HERSTELLUNG EINES VERKLEIDUNGTEILS**
TRIM COMPONENT FOR INTERNAL FITTING ESPECIALLY IN MOTOR VEHICLES AND PROCESS FOR PRODUCING IT
ELEMENT DE REVETEMENT SERVANT A L'HABILLAGE INTERIEUR, EN PARTICULIER DE VEHICULES AUTOMOBILES, ET SON PROCEDE DE PRODUCTION

(30) Priorität: 02.11.1994 DE 4439015; 05.01.1995 DE 19500233
(43) Veröffentlichungstag der Anmeldung: 16.10.1996
(73) Patentinhaber: EMPE Findlay Industries GmbH, 82538 Geretsried (DE)
(72) Erfinder: SCHERF, Ansgar, D-82057 Icking (DE)
(74) Vertreter: Jönsson, Hans-Peter, Dr.Dipl.-Chem.
(86) Internationale Anmeldenummer: DE9501426
(87) Internationale Veröffentlichungsnummer: WO9614223

(56) Entgegenhaltungen:
- EP-A- 0 586 908
- EP-A- 0 591 553
- US-A- 4 769 278
- PATENT ABSTRACTS OF JAPAN vol. 8 no. 9 (M-268) ,14.Januar 1984 & JP,A,58 171923 (HONDA GIKEN) 8.Oktober 1983,

## Beschreibung

Die Erfindung betrifft ein Verkleidungsteil für den Innenausbau, insbesondere von Kraftfahrzeugen. Ferner betrifft die Erfindung ein Verfahren zur Herstellung eines Verkleidungsteils.

Nach dem Stand der Technik wird ein gattungsgemäßes Verkleidungsteil zweiteilig, d.h. aus einem Crash-Pad und einer Verkleidung, hergestellt, wobei die Verkleidung aus einem Trägermaterial und einem darauf aufgebrachten Dekormaterial, wie z.B. Stoff, besteht. Ein derartiges Verkleidungsteil weist die Nachteile auf, daß das Trägermaterial sich von dem Material des Crash-Pads unterscheidet, separat hergestellt werden muß, sowie zum Aufbringen des Dekormaterials ein Kaschierkleber notwendig ist. Darüber hinaus sind zum Kaschieren von Dekormaterial auf einem derartigen Verkleidungsteil mindestens zwei Schritte notwendig.

Der Erfindung liegt somit die Aufgabe zugrunde, ein gattungsgemäßes Verkleidungsteil zu liefern, bei dem neben dem Dekormaterial und gegebenenfalls einem oder mehreren ummantelten, umschäumten Befestigungs-Trägern nur ein einziger Kunststoff und kein Kaschierkleber notwendig ist. Eine weitere, der Erfindung zugrundeliegende Aufgabe besteht darin, ein Verfahren für die Herstellung eines derartigen Verkleidungsteils zur Verfügung zu stellen.

Erfindungsgemäß wird diese Aufgabe gelöst durch ein gattungsgemäßes Verkleidungsteil für den Innenausbau, insbesondere von Kraftfahrzeugen, das ein EPP-Formteil, das aus einem aus expandierten Polypropylen (EPP)-Kügelchen bestehenden Material hergestellt ist, ein Dekormaterial, insbesondere Stoff und/oder Folie, und gegebenenfalls einen oder mehrere ummantelte, umschäumte Befestigungsträger umfaßt, wobei auf einer der dem Dekormaterial zugewandten Seite des EPP-Formteils eine steife, verpreßte, massive, hautähnliche Träger-Schicht ausgebildet ist, auf der das Dekormaterial eine Einheit mit dem EPP-Formteil bildend ohne zusätzlichen Klebstoff gehalten wird.

Dabei kann vorgesehen sein, daß das spezifische Gewicht des EPP-Materials zwischen 24 kg/m³ und 90 kg/m³ beträgt.

Vorzugsweise beträgt das spezifische Gewicht des Materials 70 kg/m³.

Weiterhin kann vorgesehen sein, daß die Dichte der verpreßten, massiven Träger-Schicht ca. 500-900 kg/m³, vorzugsweise 800 kg/m³ beträgt.

In einer bevorzugten Ausführungsform der Erfindung beträgt die Dicke der verpreßten, massiven Träger-Schicht zwischen 0,1 und 1,5 mm und vorzugsweise 1,0 mm.

Desweiteren wird erfindungsgemäß die Aufgabe bzgl. des Verfahrens gelöst durch die folgenden Verfahrensschritte: 1. Aufheizen einer definierten Randzone des EPP-Formteils, und 2. Aufbringen und Pressen des Dekormaterials auf die erwärmte Randzone.

Dabei kann vorgesehen sein, daß die Dicke der Randzone zwischen 1 und 30 mm beträgt.

Vorzugsweise beträgt die Randzone 10 mm.

Weiterhin kann vorgesehen sein, daß die Randzone auf eine Temperatur von zwischen 150 und 200°C und vorzugsweise auf eine Temperatur von 180°C erwärmt wird.

Darüber hinaus kann vorgesehen sein, daß die Randzone während einer Dauer von zwischen 2 und 60 sec. und vorzugsweise während einer Dauer von 10 sec erwärmt wird.

Günstigerweise wird zum Aufheizen der Randzone mindestens ein Heizstrahler verwendet.

In einer besonderen Ausführungsform der Erfindung kann vorgesehen sein, daß das Dekormaterial mittels eines nicht erhitzten Kaschierstempels auf die erwärmte Randzone aufgebracht und gegen das EPP-Formteil gepreßt wird.

Dabei kann vorgesehen sein, daß das Dekormaterial über ein Vakuum in den nicht erhitzten Kaschierstempel eingezogen und gehalten wird.

Weiterhin kann vorgesehen sein, daß das Dekormaterial mittels eines Spannrahmens auf dem nicht erhitzten Kaschierstempel gehalten wird.

Schließlich kann vorgesehen sein, daß die Dicke der nach dem Erkalten resultierenden verpreßten, massiven TrägerSchicht zwischen 0,1 und 1,5 mm und vorzugsweise 1,0 mm beträgt.

Der Erfindung liegt die überraschende Erkenntnis zugrunde, daß durch eine steife, verpreßte, massive, hautähnliche Träger-Schicht auf einer der dem Dekormaterial zugewandten Seite des EPP-Formteils die Funktion des herkömmlichen Trägermaterials in dem EPP-Formteil integriert werden kann, wodurch sich ein einteiliges Verkleidungsteil mit integriertem Crash Pad, das neben dem Dekormaterial und gegebenenfalls einen oder mehreren ummantelten, umschäumcen Befestigungs-Trägern nur aus einem einzigen Kunststoff (z.B. PP) besteht, ergibt, was zum einen zu einer Gewichtsreduzierung und somit zu einer Reduzierung des Treibstoffverbrauchs eines Kraftfahrzeugs und zum anderen zu einem einfacheren und damit kostengünstigeren Recycling führt, da aufgrund eines einzigen Kunststoffmaterials die Materialien nicht mehr getrennt werden müssen. Weiterhin erfüllt das einteilige Verkleidungsteil mit integriertem Crash Pad ebenso wie ein herkömmliches einteiliges und/ oder mehrteiliges Verkleidungsteil die Sicherheitsanforderungen.

Das erfindungsgemäße Verfahren zeichnet sich dadurch aus, daß es eine sogenannte "One Step"-Kaschierung umfaßt, wodurch der Zeit- und Kostenaufwand zur Herstellung eines derartigen Verkleidungsteiles reduziert wird.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
- Fig. 1: eine schematische Querschnittsansicht eines in seiner Herstellung gemäß dem erfindungsgemäßen Verfahren befindlichen, erfindungsgemäßen Verkleidungsteils mit integriertem Crash Pad;
- Fig. 2: einen Ausschnitt von Fig. 1, der die erfindungsgemäße Anordnung der Schichten an der dem Dekormaterial zugewandten Seite des EPP-Formteils zeigt; und einen Ausschnitt von Fig. 1, der die Schichten im Bereich der dem Dekormaterial zugewandten Seite des EPP-Formteils mit integriertem Crash Pad im fertigen Zustand zeigt.

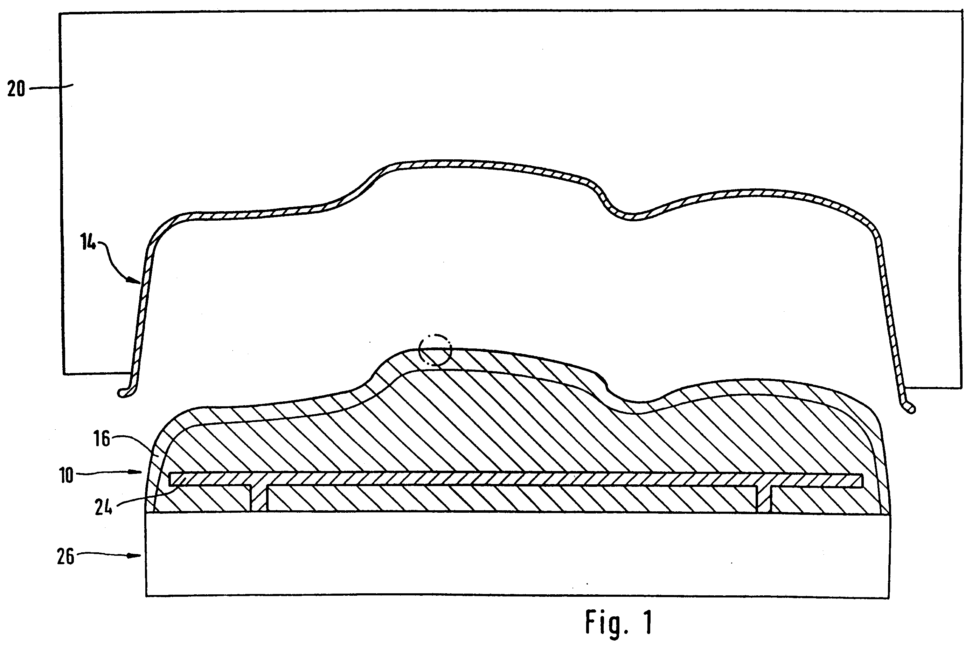

Fig. 1 zeigt ein EPP-Formteil 10 aus EPP-Kügelchen mit einem ummantelten, umschäumten Befestigungs-Träger 24, das in einer entsprechenden nicht erhitzten Aufnahme 26 gehalten wird. Oberhalb des EPP-Formteils 10 befindet sich ein nicht erhitzter Kaschierstempel 20, der mittels eines Vakuums ein Dekormaterial 14 hält. Das Dekormaterial 14 kann auch mit Hilfe eines Spannrahmens 22 (nicht gezeigt) gehalten werden.

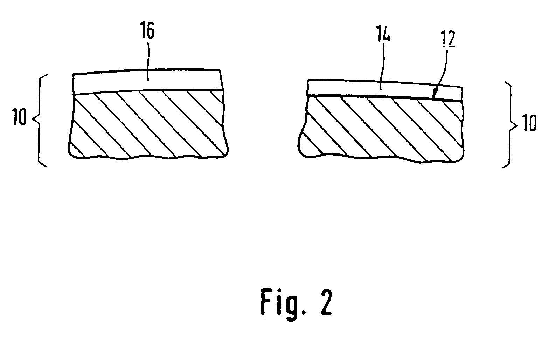

Fig. 2 zeigt einen Ausschnitt (in Fig. 1 durch einen Kreis gekennzeichnet) von den Schichten im Bereich der dem Dekormaterial zugewandten Seite des EPP-Formteils. Im linken Teil von Fig. 2 kennzeichnet das Bezugszeichen 16 eine definierte Randzone 16, die mittels mindestens eines Heizstrahlers 18 (nicht dargestellt) bis in eine definierte Schichtdicke aufgeheizt wird, bevor der nicht erhitzte Kaschierstempel 20 in Richtung des EPP-Formteils 10 bewegt wird. Das Aufheizen der definierten Randzone 16 bewirkt ein Schmelzen des aus EPP-Kügelchen bestehenden Materials und resultiert in einer verpreßten, massiven Träger-Schicht 12 (s. rechte Seite von Fig. 2). Auf diese verpreßte, massive Träger-Schicht 12 wird gleichzeitig das Dekormaterial 14 mittels des nicht erhitzten Kaschierstempels 20 aufgebracht und gegen das EPP-Formteil 10 auf ein Sollmaß gepreßt. Durch anschließendes Abkühlen wird die verpreßte, massive Träger-Schicht 12 zu einer widerstandsfähigen, steifen Haut, die die Trägerfunktion eines herkömmlichen, separaten Trägermaterials übernimmt. Das Dekormaterial 14 bildet eine Einheit mit dem EPP-Formteil 10 und wird darauf fest gehalten.

Dadurch, daß die Trägerfunktion in dem EPP-Verkleidungsteil integriert ist, liegt neben dem Dekormaterial und gegebenenfalls eines oder mehrerer ummantelter, umschäumter Befestigungs-Träger nur ein Kunststoff vor. Somit wird das Verkleidungsteil leichter und läßt sich auf einfache Weise, d.h. ohne Aussortieren, recyclieren.

Die in der vorangehenden Beschreibung, in der Zeichnung sowie in den Ansprüchen offenbarten Merkmale der Erfindung können sowohl einzeln als auch beliebigen Kombinationen für die Verwirklichung der Erfindung in ihren verschiedenen Ausführungsformen wesentlich sein.

## Patentansprüche

1. Verkleidungsteil für den Innenausbau, insbesondere von Kraftfahrzeugen, das ein EPP-Formteil, das aus einem aus expandierten Polypropylen (EPP)-Kügelchen bestehenden Material hergestellt ist, ein Dekormaterial, insbesondere Stoff und/oder Folie, und gegebenenfalls einen oder mehrere ummantelte, umschäumte Befestigungs-Träger umfaßt, wobei auf einer der dem Dekormaterial zugewandten Seite des EPP-Formteils (10) eine steife, verpreßte, massive, hautähnliche Träger-Schicht (12) ausgebildet ist, auf der das Dekormaterial (14) eine Einheit mit dem EPP-Formteil (10) bildend ohne zusätzlichen Klebstoff gehalten wird.

2. Verkleidung nach Anspruch 1, dadurch gekennzeichnet, daß das spezifische Gewicht des Materials zwischen 24 kg/m³ und 90 kg/m³ beträgt.

3. Verkleidung nach Anspruch 2, dadurch gekennzeichnet, daß das spezifische Gewicht des Materials vorzugsweise 70 kg/m³ beträgt.

4. Verkleidung nach einem der vorangehenden Ansprüche, dadurch gekennzeichnet, daß die Dichte der verpreßten, massiven Träger-Schicht 500-900 kg/m³ beträgt.

5. Verkleidung nach Anspruch 4, dadurch gekennzeichnet, daß die Dichte der verpreßten, massiven Träger-Schicht vorzugsweise 800 kg/m³ beträgt.

6. Verkleidung nach einem der vorangehenden Ansprüche, dadurch gekennzeichnet, daß die Dicke der verpreßten, massiven Träger-Schicht (12) zwischen 0,1 und 1,5 mm beträgt.

7. Verkleidung nach Anspruch 6, dadurch gekennzeichnet, daß die Dicke der verpreßten, massiven Träger-Schicht (12) vorzugsweise 1,0 mm beträgt.

8. Verfahren zur Herstellung eines Verkleidungsteils gemäß einem der vorangehenden Ansprüche, gekennzeichnet durch die folgenden Verfahrensschritte:
1. Aufheizen einer definierten Randzone (16) des EPP-Formteils (10), und
2. Aufbringen und Pressen des Dekormaterials (14) auf die erwärmte Randzone (16).

9. Verfahren nach Anspruch 8, dadurch gekennzeichnet, daß die Dicke der Randzone (16) zwischen 1 und 30 mm beträgt.

10. Verfahren nach Anspruch 9, dadurch gekennzeichnet, daß die Dicke der Randzone (16) vorzugsweise 10 mm beträgt.

11. Verfahren nach einem der vorangehenden Ansprüche, dadurch gekennzeichnet, daß die Randzone (16) auf eine Temperatur von zwischen 150 und 200°C erwärmt wird.

12. Verfahren nach Anspruch 11, dadurch gekennzeichnet, daß die Randzone (16) vorzugsweise auf eine Temperatur von 180°C erwärmt wird.

13. Verfahren nach einem der Ansprüche 8 bis 12, dadurch gekennzeichnet, daß die Randzone (16) während einer Dauer von zwischen 2 und 60 sec. erwärmt wird.

14. Verfahren nach Anspruch 13, dadurch gekennzeichnet, daß die Randzone (16) vorzugsweise während einer Dauer von 10 sec. erwärmt wird.

15. Verfahren nach einem der Ansprüche 8 bis 14, dadurch gekennzeichnet, daß zum Aufheizen der Randzone (16) mindestens ein Heizstrahler (18) verwendet wird.

16. Verfahren nach einem der Ansprüche 8 bis 15, dadurch gekennzeichnet, daß das Dekormaterial (14) mittels eines nicht erhitzten Kaschierstempels (20) auf die erwärmte Randzone (16) aufgebracht und gegen das EPP-Formteil (10) gepreßt wird.

17. Verfahren nach Anspruch 16, dadurch gekennzeichnet, daß das Dekormaterial (14) über ein Vakuum in den nicht erhitzten Kaschierstempel (20) eingezogen und gehalten wird.

18. Verfahren nach Anspruch 16 oder 17, dadurch gekennzeichnet, daß das Dekormaterial (14) mittels eines Spannrahmens (22) in dem nicht erhitzten Kaschierstempel (20) gehalten wird.

19. Verfahren nach einem der Ansprüche 8 bis 18, dadurch gekennzeichnet, daß die Dicke der nach dem Erkalten resultierenden, verpreßten, massiven Träger-Schicht (12) zwischen 0,1 und 1,5 mm beträgt.

20. Verfahren nach Anspruch 19, dadurch gekennzeichnet, daß die Dicke der nach dem Erkalten resultierenden, verpreßten, massiven Träger-Schicht (12) vorzugsweise 1,0 mm beträgt.

## Claims

1. A trim component for internal fitting, especially of motor vehicles, comprising an EPP molding prepared from a material made of expanded polypropylene (EPP) beads, a decoration material, especially fabric and/or plastic sheet, and optionally one or more extrusion coated, foam coated attaching supports, wherein a rigid, compressed, solid, skin-like support layer (12) is formed on a side of said EPP molding (10) facing said decoration material on which layer said decoration material (14) is held without an additional adhesive integrally with said EPP molding (10).

2. The trim according to claim 1, characterized in that the density of the material is between 24 kg/m³ and 90 kg/m³.

3. The trim according to claim 2, characterized in that the density of the material is preferably 70 kg/m³.

4. The trim according to any of the preceding claims, characterized in that the density of said compressed, solid support layer is from 500 to 900 kg/m³.

5. The trim according to claim 4, characterized in that the density of said compressed, solid support layer is preferably 800 kg/m³.

6. The trim according to any of the preceding claims, characterized in that the thickness of said compressed, solid support layer (12) is between 0.1 and 1.5 mm.

7. The trim according to claim 6, characterized in that the thickness of said compressed, solid support layer (12) is preferably 1.0 mm.

8. A process for the preparation of a trim component according to any of the preceding claims, characterized by the following process steps:
1) heating a defined rim zone (16) of said EPP molding (10); and
2) applying and pressing said decoration material (14) onto the heated rim zone (16).

9. The process according to claim 8, characterized in that the thickness of said rim zone (16) is between 1 and 30 mm.

10. The process according to claim 9, characterized in that the thickness of said rim zone (16) is preferably 10 mm.

11. The process according to any of the preceding claims, characterized in that said rim zone (16) is heated to a temperature of between 150 and 200°C.

12. The process according to claim 11, characterized in that said rim zone (16) is preferably heated to a temperature of 180°C.

13. The process according to any of claims 8 to 12, characterized in that said rim zone (16) is heated for a period of between 2 and 60 s.

14. The process according to claim 13, characterized in that said rim zone (16) is preferably heated for a period of 10 s.

15. The process according to any of claims 8 to 14, characterized in that at least one radiant heater is used for said heating of the rim zone (16).

16. The process according to any of claims 8 to 15, characterized in that said decoration material (14) is applied to the heated rim zone (16) and pressed onto said EPP molding (10) by means of a non-heated laminator plunger (20).

17. The process according to claim 16, characterized in that said decoration material (14) is pulled into and held in said non-heated laminator plunger (20) by a vacuum.

18. The process according to claim 16 or 17, characterized in that said decoration material (14) is held in said non-heated laminator plunger (20) by means of a tenter frame (22).

19. The process according to any of claims 8 to 18, characterized in that the thickness of the compressed solid support layer (12) resulting upon cooling is between 0.1 and 1.5 mm.

20. The process according to claim 19, characterized in that the thickness of the compressed solid support layer (12) resulting upon cooling is preferably 1.0 mm.

## Revendications

1. Elément de garniture pour habillage intérieur, en particulier de véhicules automobiles, qui comprend une pièce moulée d'EPP, qui est produite à partir d'un matériau constitué de perles de polypropylène expansé (EPP), un matériau ornemental, en particulier un tissu et/ou un film, et éventuellement un ou plusieurs supports de fixation gainés et/ou pourvus d'un revêtement alvéolaire; élément dans lequel est formée, sur une face de la pièce moulée d'EPP (10) tournée vers le matériau ornemental, une couche de support (12) similaire à une peau rigide, compactée et massive, sur laquelle le matériau ornemental (14) est maintenu en formant une pièce avec la pièce moulée d'EPP (10), sans addition de colle.

2. Garniture selon la revendication 1, caractérisée en ce que le poids spécifique du matériau est compris entre 24 kg/m³ et 90 kg/m³.

3. Garniture selon la revendication 2, caractérisée en ce que le poids spécifique du matériau est, de préférence, de 70 kg/m³.

4. Garniture selon l'une des revendications précédentes, caractérisée en ce que la masse volumique de la couche de support massive compactée est de 500 à 900 kg/m³.

5. Garniture selon la revendication 4, caractérisée en ce que la masse volumique de la couche de support massive compactée est, de préférence, de 800 kg/m³.

6. Garniture selon l'une des revendications précédentes, caractérisée en ce que l'épaisseur de la couche de support massive compactée (12) est comprise entre 0,1 et 1,5 mm.

7. Garniture selon la revendication 6, caractérisée en ce que l'épaisseur de la couche de support massive compactée (12) est, de préférence, de 1,0 mm.

8. Procédé de fabrication d'un élément de garniture selon l'une des revendications précédentes, caractérisé par les étapes opératoires suivantes :
1. on chauffe une zone marginale définie (16) de la pièce moulée d'EPP (10), et
2. on applique et on presse le matériau ornemental (14) sur la zone marginale chauffée (16).

9. Procédé selon la revendication 8, caractérisé en ce que l'épaisseur de la zone marginale (16) est comprise entre 1 et 30 mm.

10. Procédé selon la revendication 9, caractérisé en ce que l'épaisseur de la zone marginale (16) est, de préférence, de 10 mm.

11. Procédé selon l'une des revendications précédentes, caractérisé en ce que la zone marginale (16) est chauffée à une température comprise entre 150 et 200°C.

12. Procédé selon la revendication 11, caractérisé en ce que la zone marginale (16) est chauffée, de préférence, à une température de 180°C.

13. Procédé selon l'une des revendications 8 à 12, caractérisé en ce que la zone marginale (16) est chauffée pendant une période comprise entre 2 et 60 secondes.

14. Procédé selon la revendication 13, caractérisé en ce que la zone marginale (16) est chauffée, de préférence, pendant une période de 10 secondes.

15. Procédé selon l'une des revendications 8 à 14, caractérisé en ce qu'on utilise au moins un radiateur chauffant (18) pour chauffer la zone marginale (16).

16. Procédé selon l'une des revendications 8 à 15, caractérisé en ce que le matériau ornemental (14) est appliqué sur la zone marginale chauffée (16) et pressé contre la pièce moulée d'EPP (10), au moyen d'une presse de contrecollage non chauffée (20).

17. Procédé selon la revendication 16, caractérisé en ce que le matériau ornemental (14) est aspiré et maintenu dans la presse de contrecollage non chauffée (20) par l'application d'une dépression.

18. Procédé selon la revendication 16 ou 17, caractérisé en ce que le matériau ornemental (14) est maintenu dans la presse de contrecollage non chauffée (20) au moyen d'un cadre de serrage (22).

19. Procédé selon l'une des revendications 8 à 18, caractérisé en ce que l'épaisseur de la couche de support massive compactée (12) obtenue, après le refroidissement, est comprise entre 0,1 et 1,5 mm.

20. Procédé selon la revendication 19, caractérisé en ce que l'épaisseur de la couche de support massive compactée (12) obtenue après le refroidissement est, de préférence, de 1,0 mm.
